# EUROPEAN PATENT APPLICATION

(11) **EP 4 485 138 A1**
(43) Date of publication of application: **01.01.2025**
(21) Application number: 23803280.9
(22) Date of filing: 03.04.2023
(51) Int. Cl.: G06F 1/26, H01M 10/44

(54) **BATTERY PACK, ELECTRONIC DEVICE, COMMUNICATION SYSTEM, AND COMMUNICATION METHOD**

(30) Priority: 09.05.2022 JP 2022077116
(71) Applicant: Panasonic Intellectual Property Management Co., Ltd., Kadoma-shi, Osaka 571-0057 (JP)
(72) Inventor: OCHI, Makoto, Kadoma-shi, Osaka 571-0057 (JP)
(74) Representative: Grünecker Patent- und Rechtsanwälte PartG mbB
(86) International application number: PCT/JP2023/013829
(87) International publication number: WO 2023/218797

(57) **Abstract**

A battery pack according to the present disclosure comprises a battery that supplies power to the electronic device, a communicator that receives power from the battery and performs near field communication, and a setting storage that stores a setting related to power supply from the battery to the communicator, wherein when the battery pack is connected to the electronic device, the communicator is supplied with power from the battery on a basis of the setting stored in the setting storage and performs near field communication.

## Description

### TECHNICAL FIELD

The present disclosure relates to a battery pack, an electronic device, a communication system, and a communication method.

### BACKGROUND ART

Electronic devices having a wireless communication function are known. For example, Patent Document 1 describes an electronic device that, when unlocking between a personal computer and a docker is detected, supplies power to a wireless communicator to enable wireless communication, and enables wireless communication with an external wireless device.

### PRIOR ART DOCUMENT

### PATENT DOCUMENT

Patent Document 1: JP-A-2002-108521

### SUMMARY OF THE INVENTION

### PROBLEMS TO BE SOLVED BY THE INVENTION

The electronic device described in Patent Document 1 has a problem that the wireless communication function cannot be used when the electronic device is powered off.

The present disclosure provides a battery pack, an electronic device, an asset management system, and a method of managing an electronic device capable of using a communication function even when the electronic device is powered off.

### SOLUTIONS TO THE PROBLEMS

A battery pack according to one aspect of the present disclosure is a battery pack mounted on an electronic device, the battery pack including: a battery that supplies power to the electronic device; a communicator that receives power from the battery and performs near field communication; and a setting storage that stores a setting related to power supply from the battery to the communicator, in which when the battery pack is connected to the electronic device, the communicator is supplied with power from the battery on the basis of the setting stored in the setting storage and performs near field communication.

An electronic device according to one aspect of the present disclosure is an electronic device capable of being driven by a battery, the electronic device including a battery pack including: a battery that supplies power to the electronic device; a communicator that receives power from the battery and performs near field communication; and a setting storage that stores a setting related to power supply from the battery to the communicator, in which when the battery pack is connected to the electronic device, the communicator is supplied with power from the battery on the basis of the setting stored in the setting storage and performs near field communication.

A communication system according to one aspect of the present disclosure includes: an electronic device; a battery pack that includes a battery that supplies power to the electronic device, a communicator that receives power from the battery and performs near field communication, and a setting storage that stores a setting related to power supply from the battery to the communicator, the battery pack being mounted on the electronic device; and an information processing terminal that includes a position information detector and performs near field communication with the communicator, in which the communicator is supplied with power from the battery on the basis of a setting stored in the setting storage when the electronic device and the battery pack are connected, and the information processing terminal detects a position of the electronic device on the basis of position information detected by the position information detector when performing near field communication with the communicator.

A communication method according to one aspect of the present disclosure is a communication method of a communication system including an information processing terminal and an electronic device, the communication method including the steps of: supplying power from a battery included in a battery pack to a communicator included in the battery pack on the basis of a setting stored in a setting storage included in the battery pack mounted on the electronic device; performing near field communication by the information processing terminal with the communicator of the battery pack; acquiring position information by the information processing terminal; and detecting a position of the electronic device on the basis of the position information by the information processing terminal.

### EFFECTS OF THE INVENTION

The present disclosure provides a battery pack, an electronic device, a communication system, and a communication method capable of using a communication function even when the electronic device is powered off.

### BRIEF DESCRIPTION OF THE DRAWINGS

Fig. 1 is a block diagram illustrating a schematic configuration of an electronic device according to a first embodiment of the present disclosure.
Fig. 2 is a schematic block diagram illustrating an asset management system according to a second embodiment of the present disclosure.
Fig. 3 is a schematic diagram illustrating the asset management system of Fig. 2.
Fig. 4 is a control flowchart of the asset management system in Fig. 2.

### DETAILED DESCRIPTION

### (Background to the Present Disclosure)

Some electronic devices such as PCs and tablets have a near field communication function. Usually, a communicator that provides a near field communication function is mounted on a main body of an electronic device, and can be used when the electronic device is powered on.

On the other hand, there is also a need to use the near field communication function even when the electronic device is powered off. For example, there is a case where it is desired to grasp the position of the electronic device in a power-off state by using the near field communication function. However, the conventional electronic device has a problem that the near field communication function cannot be used when the power is turned off.

The present inventors have studied a battery pack, an electronic device, a communication system, and a communication method capable of performing near field communication in a case where a power supply of the electronic device is turned off, and have reached the following invention.

Hereinafter, an embodiment of the present disclosure will be described according to the attached drawings. Note that the following description is merely illustrative in nature, and is not intended to limit the present disclosure, its application, or its use. Furthermore, the drawings are schematic, and the proportions of dimensions and the like do not necessarily match actual ones.

Noted that, in this specification, the terms "first", "second", and the like are only used for description, and should not be understood as explicitly or implying relative importance or a rank of a technical feature. Features limited to "first" and "second" are intended to imply the inclusion of one or more such features.

### (First Embodiment)

### [Overall Configuration]

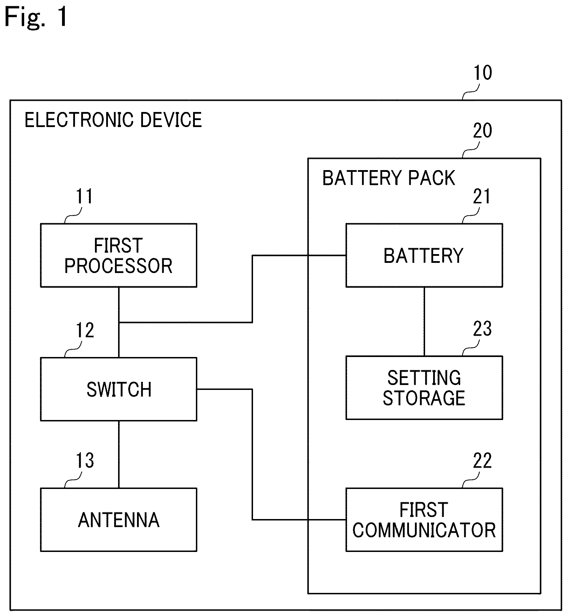

Fig. 1 is a schematic block diagram illustrating a configuration of an electronic device according to a first embodiment of the present disclosure. The electronic device 10 can detachably attach a battery pack 20, and is supplied with electric power from a battery 21 of the battery pack 20.

### <Battery Pack>

The battery pack 20 is detachably mounted on the electronic device 10 and supplies power to the electronic device 10. The battery pack 20 includes a battery 21, a first communicator 22, and a setting storage 23.

The battery 21 is constituted by, for example, a secondary battery such as a lithium ion battery. The battery 21 supplies power to the electronic device 10 and also supplies power to the first communicator 22. Note that the supply of power from the battery 21 to the first communicator 22 is performed on the basis of the setting stored in the setting storage 23 when the battery pack 20 is connected to the electronic device 10.

The first communicator 22 includes a circuit that performs near field communication with a device (not illustrated) outside the electronic device 10 in conformity with a predetermined communication standard. The predetermined communication standard includes, for example, Bluetooth (registered trademark). The near field communication means, for example, wireless communication within several meters. For example, the near field communication may be wireless communication within 50 m, preferably wireless communication within 10 m, and more preferably wireless communication within 5 m. Note that the first communicator 22 corresponds to a "communicator" of the present disclosure.

The setting storage 23 stores settings related to power supply from the battery 21 to the first communicator 22. The setting related to power supply is a value indicating whether or not to supply power from the battery 21 to the first communicator 22 when the battery pack 20 is connected to the electronic device 10. The setting related to power is stored in the setting storage 23 as, for example, a flag indicating that power is supplied from the battery 21 to the first communicator 22 (ON) or power is not supplied (OFF). The setting storage 23 includes, for example, a storage medium such as RAM, ROM, PROM, PROM, EPROM, or flash memory.

### <Electronic Device>

The electronic device 10 is, for example, an electronic device that can be driven by a battery such as a laptop PC. The electronic device 10 includes the battery pack 20, a first processor 11, a switch 12, and an antenna 13, and is supplied with electric power by the battery 21 of the battery pack 20.

The first processor 11 controls each component of the electronic device 10. The first processor 11 can be implemented by a semiconductor element or the like. The first processor 11 can be configured by a microcomputer, a CPU, an MPU, a GPU, a DSP, an FPGA, or an ASIC. The first processor 11 reads data and programs stored in a storage medium, which is not illustrated, and performs various arithmetic processing to implement a predetermined function.

The first processor 11 controls the switch 12 on the basis of the setting stored in the setting storage 23. In a case where the setting stored in the setting storage 23 is changed to "ON", the first processor 11 controls the switch 12 to connect the battery 21 and the first communicator 22 when the battery pack 20 is connected to the electronic device 10. In addition, in a case where the setting stored in the setting storage 23 is changed to "OFF", the first processor 11 controls the switch 12 so as not to connect the battery 21 and the first communicator 22 when the battery pack 20 is connected to the electronic device 10. In addition, the first processor 11 can update the setting stored in the setting storage 23 of the battery pack 20 when the battery pack 20 is connected to the electronic device 10. For example, the first processor 11 can update the setting stored in the setting storage 23 by executing a program such as an operating system (OS) or a basic input output system (BIOS). Note that the first processor 11 corresponds to a "processor" of the present disclosure.

The switch 12 is a circuit that changes over the electrical connection between the battery 21 and the first communicator 22 when the battery pack 20 is connected to the electronic device 10. When the battery pack 20 is connected to the electronic device 10, the switch 12 performs switching as to whether or not to electrically connect the battery 21 and the first communicator 22 on the basis of the setting stored in the setting storage 23 included in the battery pack 20. For example, in a case where the setting stored in the setting storage 23 is "ON", when the battery pack 20 is connected to the electronic device 10, the switch 12 electrically connects the battery 21 and the first communicator 22, so that power can be supplied from the battery 21 to the first communicator 22. In addition, in a case where the setting stored in the setting storage 23 is "OFF", when the battery pack 20 is connected to the electronic device 10, the switch 12 disconnects the electrical connection between the battery 21 and the first communicator 22, so that power is not supplied from the battery 21 to the first communicator 22.

As illustrated in Fig. 1, the battery 21 and the first communicator 22 are not electrically connected in the battery pack 20, but are electrically connected via the switch 12 when the battery pack 20 is connected to the electronic device 10. The switch 12 changes whether or not to connect the battery 21 and the first communicator 22 on the basis of the setting stored in the setting storage 23.

The antenna 13 is connected to the first communicator 22 and transmits and receives a radio wave of near field communication. Since the first communicator 22 uses the antenna 13 disposed in the main body of the electronic device 10, it is not necessary to mount an antenna on the battery pack 20, so that the battery pack 20 can be downsized. Note that the antenna 13 may be disposed in the battery pack 20.

### [Operation]

Operations of the electronic device 10 and the battery pack 20 will be described.

As illustrated in Fig. 1, in the battery pack 20 alone, the battery 21 and the first communicator 22 are not electrically connected. When the battery pack 20 is connected to the electronic device 10, the battery 21 and the first communicator 22 are connected via the switch 12. In other words, the battery 21 and the first communicator 22 are electrically connected via the electronic device 10.

When the battery pack 20 is connected to the electronic device 10, the switch 12 changes over to "on" or "off" of the connection between the battery 21 and the first communicator 22 on the basis of the setting stored in the setting storage 23 of the battery pack 20. When the setting stored in the setting storage 23 is "ON (to connect the battery 21 and the first communicator 22)", the battery 21 and the first communicator 22 are electrically connected via the switch 12. When the setting stored in the setting storage 23 is "OFF (to disconnect the battery 21 and the first communicator 22)", the battery 21 and the first communicator 22 are not electrically connected.

In the present embodiment, when electronic device 10 is powered off, power is supplied from the battery 21 to the first communicator 22. That is, the first communicator 22 of the battery pack 20 can be used when the power of the electronic device 10 is off.

Further, when the battery 21 and the first communicator 22 are electrically connected, the first communicator 22 and the antenna 13 are connected via the switch 12. The first communicator 22 can perform near field communication with a device outside the electronic device 10 using the antenna 13.

The outside device is, for example, an information processing terminal that can be carried by the user, such as a smartphone or a tablet. In a case where the information processing terminal can perform near field communication with the first communicator 22, the information processing terminal can determine that the electronic device 10 is near the information processing terminal. Being near the information processing terminal is within a range of a distance in which proximity wireless communication is possible, and is, for example, within several meters, preferably within 5 meters. Therefore, the information processing terminal can detect the position of the electronic device 10 on the basis of position information of a GPS mounted on the information processing terminal and the like. Since the first communicator 22 of the battery pack 20 and the information processing terminal can perform near field communication when the electronic device 10 is powered off, the position of the electronic device 10 can be detected even when the electronic device 10 is powered off.

### [Effects]

According to the above-described embodiment, it is possible to provide a battery pack and an electronic device capable of using a communication function even when a power supply of the electronic device is turned off.

By disposing the first communicator 22 in the battery pack 20, even when the power supply of the electronic device 10 is turned off, power can be supplied from the battery 21 to the first communicator 22 to use the near field communication function. Since the near field wireless communication function can be used even when the power of the electronic device 10 is off, it is possible to detect the position of the electronic device 10 in the off state using an information processing terminal such as a smartphone, for example. In addition, since power is supplied from the battery 21 to the first communicator 22 on the basis of the setting stored in the setting storage 23, power saving can be achieved without supplying power when the first communicator 22 is not used.

Furthermore, for example, in a case where the electronic device 10 is used in a country having different near field communication standards or specifications, it is possible to support various standards or specifications by replacing the battery pack with the battery pack 20 including the corresponding first communicator 22.

### (Second Embodiment)

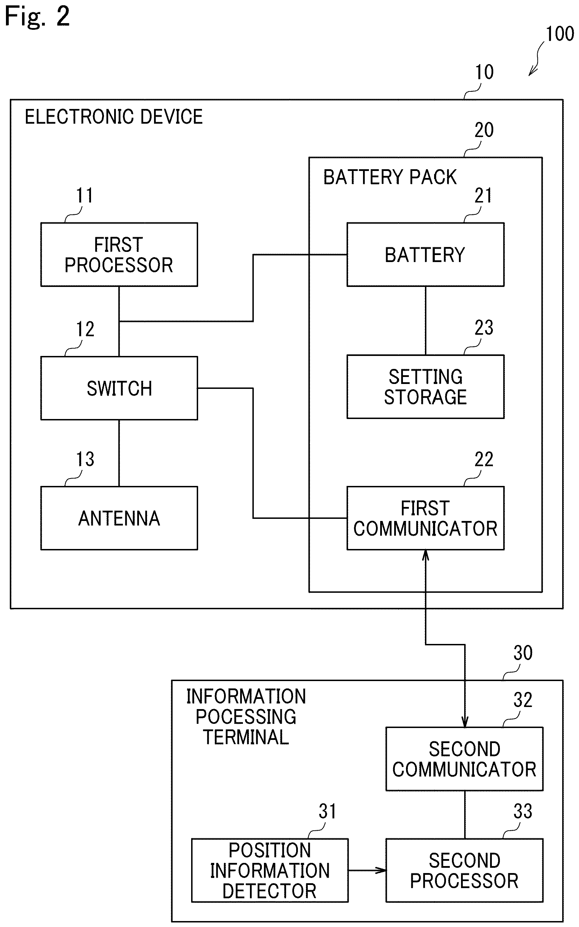

A second embodiment will be described with reference to Fig. 2. Note that, in the second embodiment, the same or equivalent components as those in the first embodiment are denoted by the same reference numerals. In the second embodiment, the description overlapping with the second embodiment is omitted.

Fig. 2 is a schematic block diagram illustrating an asset management system according to a second embodiment of the present disclosure. In the second embodiment, an asset management system 100 including the electronic device 10 and the battery pack 20 described in the first embodiment will be described.

The asset management system 100 includes an electronic device 10, a battery pack 20, and an information processing terminal 30. Since the electronic device 10 and the battery pack 20 are similar to those described in the first embodiment, the description thereof is omitted.

The information processing terminal 30 is a mobile terminal that can be carried by the user and can perform near field communication. The information processing terminal 30 includes a position information detector 31. Furthermore, the information processing terminal 30 includes a second communicator 32 and a second processor 33.

The position information detector 31 detects position information of the information processing terminal 30. The position information detector 31 is, for example, a global positioning system (GPS). The position information is, for example, information including latitude and longitude.

The second communicator 32 includes a circuit that performs near field communication with the first communicator 22 of the battery pack 20 in conformity with a predetermined communication standard. The predetermined communication standard includes, for example, Bluetooth (registered trademark).

The second processor 33 controls each component of the information processing terminal 30. The second processor 33 can be implemented by a semiconductor element or the like. The second processor 33 can be configured by a microcomputer, a CPU, an MPU, a GPU, a DSP, an FPGA, an ASIC, or the like.

When the electronic device 10 and the battery pack 20 are connected, the first communicator 22 is supplied with electric power from the battery 21 and enters a state capable of near field communication. When the second communicator 32 performs the near field communication with the first communicator 22 of the battery pack 20, the information processing terminal 30 acquires the position information by the position information detector 31. The information processing terminal 30 detects the position of the electronic device 10 on the basis of the acquired position information and the fact that the second communicator 32 and the first communicator 22 of the information processing terminal 30 perform proximity communication.

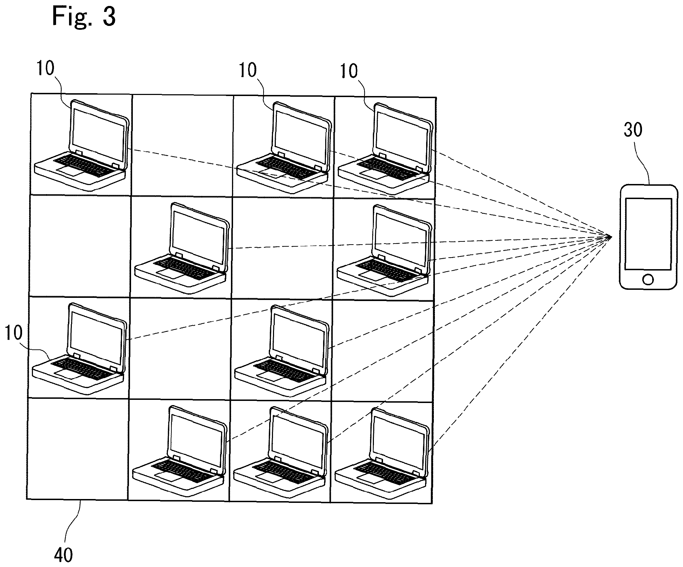

Fig. 3 is a schematic diagram illustrating the asset management system in Fig. 2. An example in which a plurality of electronic devices 10 are housed and managed in a housing rack 40 will be described with reference to Fig. 3.

For example, in a case where the electronic device 10 is a device such as an inspection laptop PC that is removed from the housing rack 40, used, and then returned to the housing rack by an inspector, it is possible to confirm whether or not the electronic device 10 has been returned using the asset management system 100.

As illustrated in Fig. 3, a plurality of electronic devices 10 can be accommodated in the housing rack 40. The information processing terminal 30 is operated near the housing rack 40 to detect the electronic device 10 capable of performing near field communication with the information processing terminal 30. The information processing terminal 30 can determine that the electronic device 10 capable of performing near field communication with the information processing terminal 30 is near the information processing terminal 30. In practice, the second communicator 32 of the information processing terminal 30 and the first communicator 22 of the battery pack 20 perform near field communication.

At this time, in a case where the position information detected by the position information detector 31 indicates the vicinity of the place where the housing rack 40 is installed, the information processing terminal 30 can determine that the electronic device 10 capable of performing near field communication is accommodated in the housing rack 40.

Since the battery pack 20 is provided with the first communicator 22, near field communication between the electronic device 10 and the information processing terminal 30 is enabled even when the power of the electronic device 10 is turned off. Therefore, it is possible to easily determine whether or not the electronic device 10 is accommodated in the housing rack 40, and it is possible to improve convenience in managing the electronic device 10.

### [Operation]

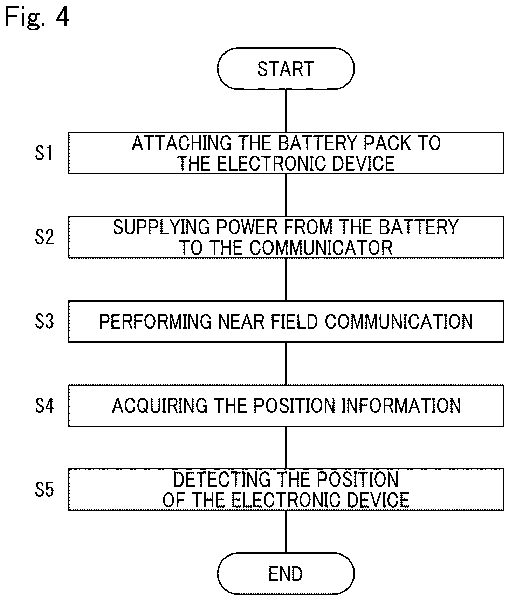

Fig. 4 is a control flowchart of the asset management system in Fig. 2. An operation of the asset management system 100 will be described with reference to Fig. 4.

As illustrated in Fig. 4, in step S1, the battery pack 20 is attached to the electronic device 10. For example, when the user attaches the battery pack to the electronic device 10, the electronic device 10 and the battery pack 20 are connected.

When the battery pack 20 is connected to the electronic device 10, power is supplied from the battery 21 of the battery pack 20 to the first communicator 22 in a case where the power supply of the electronic device 10 is turned off in step S2. Power is supplied from the battery 21 to the first communicator 22 via the electronic device 10. Specifically, as illustrated in Fig. 2, the battery 21 and the first communicator 22 are electrically connected via the switch 12 of the electronic device 10, and power is supplied from the battery 21 to the first communicator 22. The switch 12 connects the battery 21 and the first communicator 22 on the basis of the setting stored in the setting storage 23 of the battery pack 20.

When power is supplied from the battery 21 to the first communicator 22, the battery pack 20 enters a state capable of near field communication. In step S3, the information processing terminal 30 performs near field communication with the first communicator 22 of the battery pack 20. In the present embodiment, the second communicator 32 of the information processing terminal 30 and the first communicator 22 of the battery pack 20 perform near field communication. At this time, the information processing terminal 30 can perform near field communication with the first communicators 22 of the plurality of electronic devices 10.

In step S4, the information processing terminal 30 acquires the position information by the position information detector 31.

The information processing terminal 30 detects the position of the electronic device 10 in step S5 on the basis of the detected position information. The information processing terminal 30 can determine that the electronic device 10 is near the information processing terminal 30 by being able to perform near field communication with the first communicator 22 of the battery pack 20. Therefore, the position information of the information processing terminal 30 can be used as the position information of the electronic device 10. In a case where the information processing terminal 30 performs near field communication with a plurality of electronic devices 10, the information processing terminal 30 can detect the position information of the electronic devices 10 as the position information of the information processing terminal 30.

### [Effects]

According to the above-described embodiment, it is possible to easily manage the plurality of electronic devices 10. In the asset management system 100 according to the second embodiment, even when the electronic device 10 is powered off, the first communicator 22 of the battery pack 20 can perform near field communication. Therefore, in a case where the information processing terminal 30 and the electronic device 10 perform near field communication, it is possible to grasp that the electronic device 10 is at a predetermined position by using the position information of the information processing terminal.

For example, in a case where it is desired to grasp the number of electronic devices 10 accommodated in the housing rack 40, it is possible to grasp all the electronic devices 10 accommodated in the housing rack 40 by the information processing terminal 30, and thus it is possible to save time and effort for the user to count.

Note that, in the above-described embodiment, an example in which the information processing terminal 30 is a smartphone has been described, but the present disclosure is not limited thereto. The information processing terminal 30 only needs to be a mobile terminal having a near field communication function and a position information detection function. For example, the information processing terminal 30 may be a tablet PC or the like.

### (Summary of Embodiments)

(1) A battery pack mounted on an electronic device is disclosed. The battery pack comprises a battery that supplies power to the electronic device, a communicator that receives power from the battery and performs near field communication, and a setting storage that stores a setting related to power supply from the battery to the communicator, wherein in response to connecting the battery pack to the electronic device, the communicator is supplied with power from the battery on a basis of the setting stored in the setting storage and performs near field communication.
(2) In the battery pack according to (1), wherein the battery and the communicator are electrically connected via the electronic device.
(3) In the battery pack according to (1) or (2), wherein the communicator is supplied with power from the battery via the electronic device in response to turning off the electronic device.
(4) An electronic device capable of being driven by a battery is disclosed. The electronic device comprises a battery pack including a battery that supplies power to the electronic device, a communicator that receives power from the battery and performs near field communication, and a setting storage that stores a setting related to power supply from the battery to the communicator, wherein in response to connecting the battery pack to the electronic device, the communicator is supplied with power from the battery on a basis of the setting stored in the setting storage and performs near field communication.
(5) In the electronic device according to (4), wherein the battery and the communicator are electrically connected via the electronic device.
(6) In the electronic device according to (4) or (5), the electronic device further comprises a processor that controls the electronic device, and a switch that changes over to connection or disconnection between the battery and the communicator, wherein the processor updates the setting stored in the setting storage and controls the switch on a basis of the setting stored in the setting storage, and the communicator is supplied with power from the battery in response to connecting the battery to the communicator via the switch.
(7) In the electronic device according to any one of (4) to (6), wherein the communicator is supplied in response to turning off power from the battery when the electronic device is powered off.
(8) In the electronic device according to any one of (4) to (7), wherein the battery pack is detachably attached to the electronic device.
(9) In the electronic device according to any one of (4) to (8), the electronic device further comprises an antenna, wherein the communicator and the antenna are electrically connected in response to connecting to the electronic device.
(10) A communication system comprises an electronic device; a battery pack that includes a battery that supplies power to the electronic device, a communicator that receives power from the battery and performs near field communication, and a setting storage that stores a setting related to power supply from the battery to the communicator, the battery pack being mounted on the electronic device; and an information processing terminal that includes a position information detector and performs near field communication with the communicator, wherein the communicator is supplied with power from the battery on a basis of a setting stored in the setting storage in response to connecting the electronic device to the battery pack, and the information processing terminal detects a position of the electronic device on a basis of position information detected by the position information detector in response to performing near field communication with the communicator.
(11) In the communication system according to (10), wherein the battery and the communicator are electrically connected via the electronic device.
(12) In the communication system according to (10) or (11), wherein the information processing terminal is a smartphone.
(13) A communication method of a communication system including an information processing terminal and an electronic device is disclosed. The communication method comprising supplying power from a battery included in a battery pack to a communicator included in the battery pack on a basis of a setting stored in a setting storage included in the battery pack, the battery pack being mounted on the electronic device, performing near field communication by the information processing terminal with the communicator of the battery pack, acquiring position information by the information processing terminal, and detecting a position of the electronic device on a basis of the position information by the information processing terminal.

### INDUSTRIAL APPLICABILITY

The present disclosure can be applied to a battery pack, an electronic device powered by a battery, a communication system, and a communication method.

### EXPLANATION OF REFERENCES

- 10: Electronic device
- 11: First processor (processor)
- 12: Switch
- 13: Antenna
- 20: Battery pack
- 21: Battery
- 22: First communicator (communicator)
- 23: Setting storage
- 30: Information processing terminal
- 31: Position information detector
- 32: Second communicator
- 33: Second processor
- 40: Housing rack

## Claims

1. A battery pack mounted on an electronic device, the battery pack comprising:
a battery that supplies power to the electronic device;
a communicator that receives power from the battery and performs near field communication; and
a setting storage that stores a setting related to power supply from the battery to the communicator,
wherein in response to connecting the battery pack to the electronic device, the communicator is supplied with power from the battery on a basis of the setting stored in the setting storage and performs near field communication.

2. The battery pack according to claim 1, wherein the battery and the communicator are electrically connected via the electronic device.

3. The battery pack according to claim 1 or 2, wherein the communicator is supplied with power from the battery via the electronic device in response to turning off the electronic device.

4. An electronic device capable of being driven by a battery, the electronic device comprising a battery pack including: a battery that supplies power to the electronic device; a communicator that receives power from the battery and performs near field communication; and a setting storage that stores a setting related to power supply from the battery to the communicator,
wherein in response to connecting the battery pack to the electronic device, the communicator is supplied with power from the battery on a basis of the setting stored in the setting storage and performs near field communication.

5. The electronic device according to claim 4, wherein the battery and the communicator are electrically connected via the electronic device.

6. The electronic device according to claim 4, further comprising:
a processor that controls the electronic device; and
a switch that changes over to connection or disconnection between the battery and the communicator,
wherein
the processor updates the setting stored in the setting storage and controls the switch on a basis of the setting stored in the setting storage, and
the communicator is supplied with power from the battery in response to connecting the battery to the communicator via the switch.

7. The electronic device according to claim 4, wherein the communicator is supplied with power from the battery in response to turning off the electronic device.

8. The electronic device according to claim 4, wherein the battery pack is detachably attached to the electronic device.

9. The electronic device according to any one of claims 4 to 8, further comprising an antenna,
wherein the communicator and the antenna are electrically connected in response to connecting to the electronic device.

10. A communication system comprising:
an electronic device;
a battery pack that includes a battery that supplies power to the electronic device, a communicator that receives power from the battery and performs near field communication, and a setting storage that stores a setting related to power supply from the battery to the communicator, the battery pack being mounted on the electronic device; and
an information processing terminal that includes a position information detector and performs near field communication with the communicator,
wherein
the communicator is supplied with power from the battery on a basis of a setting stored in the setting storage in response to connecting the electronic device to the battery pack, and
the information processing terminal detects a position of the electronic device on a basis of position information detected by the position information detector in response to performing near field communication with the communicator.

11. The communication system according to claim 10, wherein the battery and the communicator are electrically connected via the electronic device.

12. The communication system according to claim 10 or 11, wherein the information processing terminal is a smartphone.

13. A communication method of a communication system including an information processing terminal and an electronic device, the communication method comprising:
supplying power from a battery included in a battery pack to a communicator included in the battery pack on a basis of a setting stored in a setting storage included in the battery pack, the battery pack being mounted on the electronic device;
performing near field communication by the information processing terminal with the communicator of the battery pack;
acquiring position information by the information processing terminal; and
detecting a position of the electronic device on a basis of the position information by the information processing terminal.
